# EUROPÄISCHE PATENTSCHRIFT

(11) **EP 3 501 765 B1**
(45) Veröffentlichungstag und Bekanntmachung des Hinweises auf die Patenterteilung: **18.01.2023**
(21) Anmeldenummer: 18205078.1
(22) Anmeldetag: 08.11.2018
(51) Int. Cl.: B26D 3/28, B26D 1/02, B26D 7/26, B26D 1/01, A22B 5/16, A22C 17/12

(54) **KLINGENHALTEVORRICHTUNG**
BLADE MOUNTING DEVICE
DISPOSITIF DE SUPPORT D'OUTIL DE COUPE

(30) Priorität: 22.12.2017 DE 102017131191
(43) Veröffentlichungstag der Anmeldung: 26.06.2019
(73) Patentinhaber: Weber Maschinenbau GmbH Breidenbach, 35236 Breidenbach (DE)
(72) Erfinder: Kolbatz, Johannes, 17094 Burg Stargard (DE); Peters, Steven, 17034 Neubrandenburg (DE)
(74) Vertreter: Manitz Finsterwald Patent- und Rechtsanwaltspartnerschaft mbB

(56) Entgegenhaltungen:
- WO-A1-02/11546
- WO-A1-2008/135205
- WO-A2-2007/008739

## Beschreibung

Die vorliegende Erfindung betrifft eine Klingenhaltevorrichtung zur Fixierung einer Klinge mit einer Schneidkante.

Derartige Klingenhalterungen finden beispielsweise in der Lebensmittelindustrie Anwendung, insbesondere bei Entschwartungsvorrichtungen, mit denen die Haut oder Schwarte eines Lebensmittelprodukts (z.B. eines Schinkens) maschinell entfernt wird. Die Klinge ist dabei ortsfest angeordnet und das Lebensmittelprodukt wird gegen die Klinge gepresst, bis die Schwarte entfernt wurde. Ersichtlich ist eine zuverlässige und präzise Fixierung der Klinge von großer Bedeutung, um ein kontrolliertes Entschwarten sicherstellen zu können.

Grundsätzlich sind Klingenhalterungen bekannt, die dies zu leisten vermögen. Eine Entschwartungsvorrichtung mit einer Klinge, die zwischen einem Klingenbalken und einer Klemme mittels eines Bolzens verspannt ist, ist aus der WO 2007/008739 A2 bekannt. Die WO 2008/135205 A1 zeigt eine Messerhaltevorrichtung für eine Entschwartungsmaschine mit einem Klemmelement, das zwischen einer Klemmstellung und einer Freigabestellung verstellbar ist, um eine Messerklinge wahlweise einzuklemmen oder freizugeben. Auch aus der WO 02/11546 A1 ist eine Klingenhaltevorrichtung mit einer Spannvorrichtung zur Halterung einer Klinge bekannt. Es besteht allerdings weiterhin Bedarf nach entsprechenden Halterungen, die einfach zu reinigen sind und die einen schnellen und einfachen Klingenwechsel ermöglichen, ohne dass deshalb Abstriche bei der Zuverlässigkeit und Präzision der Klingenfixierung gemacht werden müssen.

Mit einer Klingenhalterung mit den Merkmalen des Anspruchs 1 wurde hier Abhilfe geschaffen. Erfindungsgemäß umfasst die Klingenhalterung einen Klingenbalken mit einer Anlagefläche zur Aufnahme der Klinge, eine relativ zu der Anlagefläche bewegbare Fixierungsleiste mit einer Andruckfläche zum Fixieren der Klinge auf der Anlagefläche und eine Spannvorrichtung zum Verspannen des Klingenbalkens und der Fixierungsleiste gegeneinander. Der Klingenbalken weist eine erste Führungseinrichtung auf, die bei einem Verspannen des Klingenbalkens und der Fixierungsleiste mit einer zweiten Führungseinrichtung zusammenwirkt, die an der Fixierungsleiste angeordnet ist. Die zweite Führungseinrichtung ist in einer die Fixierungsleiste durchtretenden Ausnehmung, Durchbrechung oder Öffnung angeordnet.

Die Führungseinrichtungen spielen eine wichtige Rolle beim Verspannen, da sie die Relativbewegung des Klingenbalkens und der Fixierungsleiste in der gewünschten Weise führen, wodurch die zuverlässige Fixierung der Klinge überhaupt erst ermöglicht wird. Aufgrund der nicht unerheblichen Kräfte, die dabei auftreten, müssen die Führungseinrichtungen entsprechend konzipiert sein. Es erweist sich, dass die bei bekannten Klingenhalterungen vorgesehenen Führungseinrichtungen zwar hinreichend präzise und stabil, jedoch schwer zu reinigen sind. Dies stellt gerade in der Lebensmittelindustrie ein großes Problem dar. Durch die erfindungsgemäße Konstruktion, die zweite Führungseinrichtung in einer Ausnehmung, Durchbrechung oder Öffnung der Fixierungsleiste anzuordnen, ist diese besser zugänglich und daher besser von Verschmutzungen zu befreien. Außerdem können relativ hohe, auf die Klinge wirkende Spannkräfte erzeugt werden, so dass ein Unterwandern der Klinge durch Verschmutzungen, bei einer Entschwartungsvorrichtung insbesondere Fett, vermieden wird.

Weitere Ausführungsformen der vorliegenden Erfindung sind in den Ansprüchen, der Beschreibung und den beigefügten Zeichnungen angegeben.

Gemäß einer Ausführungsform umfasst die zweite Führungseinrichtung einen Absatz, welcher in der Ausnehmung, Durchbrechung oder Öffnung der Fixierungsleiste angeordnet ist. Diese konstruktiv einfache und daher auch kostengünstig herzustellende Ausgestaltung der zweiten Führungseinrichtung ist besonders einfach zu reinigen. Dabei ist sie trotzdem gleichermaßen wirkungsvoll wie konstruktiv aufwändigere Führungseinrichtungen.

Es kann vorgesehen sein, dass die erste Führungseinrichtung einen in einer Richtung senkrecht zu der Anlagefläche wirkenden Hinterschnitt umfasst. Mit anderen Worten wirkt der Hinterschnitt bei einem Zusammenwirken der Führungseinrichtungen Bewegungen der Fixierungsleiste in der genannten Richtung entgegen. Erfindungsgemäß ist es vorgesehen, die Führungseinrichtungen derart auszugestalten, dass die erste und die zweite Führungseinrichtung einander zugewandte und beim Verspannen zusammenwirkende Führungsflächen aufweisen, die im Wesentlichen parallel zu der Anlagefläche ausgerichtet sind, insbesondere wobei die Führungsfläche der zweiten Führungseinrichtung der Anlagefläche abgewandt ist und die Führungsfläche der ersten Führungseinrichtung der Anlagefläche zugewandt ist.

Konstruktiv einfach, zuverlässig und leicht zu reinigen ist eine Ausführungsform, bei der die erste Führungseinrichtung einstückig mit dem Klingenbalken ausgebildet ist und/oder bei der die zweite Führungseinrichtung einstückig mit der Fixierungsleiste ausgebildet ist.

Grundsätzlich ist es möglich, die erste und/oder die zweite Führungseinrichtung in einer Längsrichtung des Klingenbalkens und/oder der Fixierungsleiste im Wesentlichen durchgehend auszugestalten. Es hat sich jedoch gezeigt, dass es ausreichend und konstruktiv einfacher ist, wenn die erste und die zweite Führungseinrichtung jeweils eine Mehrzahl von über eine Längserstreckung des Klingenbalkens bzw. der Fixierungsleiste verteilt angeordnete, separate erste und zweite Führungselemente umfasst. Die Führungsleiste kann dann kompakt und gleichzeitig ausreichend stabil ausgeführt werden. Die Führungselemente können gleichmäßig verteilt angeordnet sein. Eine die tatsächlich auftretenden Kräfteverhältnisse berücksichtigende, ungleichmäßige oder symmetrisch zu einer Symmetrieebene der Klingenhaltevorrichtung, die senkrecht zu deren Längserstreckung angeordnet ist, verteilte Anordnung der Führungselemente kann jedoch ebenfalls vorteilhaft sein.

Gemäß einer weiteren Ausführungsform umfasst eine Klingenhaltevorrichtung zur Fixierung einer Klinge mit einer Schneidkante einen Klingenbalken, insbesondere gemäß einer der vorstehend beschriebenen Ausführungsformen, mit einer Anlagefläche zur Aufnahme der Klinge, eine relativ zu der Anlagefläche bewegbare Fixierungsleiste mit einer Andruckfläche zum Fixieren der Klinge auf der Anlagefläche und eine Spannvorrichtung zum Verspannen des Klingenbalkens und der Fixierungsleiste gegeneinander. Die Spannvorrichtung weist einen zweistufigen Spannmechanismus auf, mit dem eine Translationsbewegung der Fixierungsleiste in einer Richtung parallel zu der Anlagefläche und eine Spannbewegung zum Drücken der Andruckfläche gegen die Klinge erzeugbar sind, insbesondere wobei die Spannbewegung eine Schwenkbewegung der Fixierungsleiste umfasst. Insbesondere ist der Spannmechanismus derart ausgestaltet, dass zuerst die Translationsbewegung und daran (ggf. unmittelbar) anschließend die Spannbewegung erzeugbar sind. Die Spannbewegung kann mehrere Bewegungskomponenten umfassen, beispielsweise horizontale, vertikale und/oder Schwenkkomponenten. Der Klingenbalken kann eine erste Führungseinrichtung aufweisen, die bei einem Verspannen des Klingenbalkens und der Fixierungsleiste mit einer zweiten Führungseinrichtung zusammenwirkt, die an der Fixierungsleiste angeordnet ist.

Der Spannmechanismus kann ferner derart ausgestaltet sein, dass die Translationsbewegung mittels einer ersten Betätigungsschwenkbewegung und die Spannbewegung der Fixierungsleiste mittels einer zweiten Betätigungsschwenkbewegung erzeugbar sind, insbesondere wobei die erste und die zweite Betätigungsschwenkbewegung ineinander übergehen. Beispielsweise sind die erste und die zweite Betätigungsschwenkbewegung Teil einer einzigen "flüssigen" oder durchgehenden Schwenkbewegung zur Betätigung des Spannmechanismus. Dies ermöglicht ein besonders einfaches Verspannen der beteiligten Komponenten und erhöht den Bedienungskomfort der Klingenhaltevorrichtung. Es ist auch durchaus denkbar, dass sich die Translationsbewegung auch während der zweiten Betätigungsschwenkbewegung fortsetzt. Die Spannbewegung würde dann beispielsweise auch eine horizontale bzw. parallel zur Anlagefläche angeordnete Bewegungskomponente aufweisen. Zusätzlich kann die Spannbewegung ein "Verkippen" der Fixierungsleiste umfassen, die durch ein abschnittsweises "Wegdrücken" der Fixierungsleiste von dem Klingenbalken erzeugbar sein kann.

Gemäß einer Ausführungsform umfasst der Spannmechanismus eine erste Exzentereinrichtung zur Erzeugung der Translationsbewegung und eine zweite Exzentereinrichtung zur Erzeugung der Spannbewegung. Insbesondere umfasst die erste Exzentereinrichtung zwei Abschnitte, die seitlich außerhalb der zweiten Exzentereinrichtung angeordnet sind und diese somit gleichsam umfassen. Auch eine umgekehrte Ausgestaltung ist denkbar. Grundsätzlich können die erste und/oder die zweite Exzentereinrichtung mehrere separate oder räumlich getrennte Funktionsabschnitte aufweisen, die beispielsweise alternierend angeordnet sind. Auch hierbei kann den auftretenden Kräften Rechnung getragen werden, so dass diese möglichst gleichmäßig verteilt werden und/oder eine möglichst einfache Betätigung des Spannmechanismus ermöglicht wird.

Wenn die erste und die zweite Exzentereinrichtung drehfest an einer (gemeinsamen) Welle des Spannmechanismus angeordnet sind, die mittels einer motorisch oder manuell betätigtbaren Hebeleinrichtung verdrehbar gelagert ist, ergibt sich eine konstruktiv einfache, kompakte und kostengünstig herstellbare Ausführungsform der erfindungsgemäßen Klingenhaltevorrichtung. Die Welle kann mittelbar oder unmittelbar an dem Klingenbalken gelagert sein.

Insbesondere ist die erste Exzentereinrichtung in einem an der Fixierungsleiste vorgesehenen Langloch angeordnet, dessen Längsachse sich in einer Richtung quer, insbesondere im Wesentlichen senkrecht zur der Anlagefläche erstreckt. Diese einfache konstruktive Maßnahme ermöglicht eine Bewegung der Fixierungsleiste weg von dem Klingenbalken, um ein Verspannen der genannten Komponenten zuzulassen.

Die vorliegende Erfindung umfasst ferner ein Verfahren zum Fixieren einer Klinge in einer Klingenhaltevorrichtung gemäß zumindest einem der vorstehenden Ansprüche, wobei durch die Spannvorrichtung mittels einer ersten Betätigungsschwenkbewegung eine Translationsbewegung und mittels einer zweiten Betätigungsschwenkbewegung eine Spannbewegung der Fixierungsleiste erzeugt wird, durch die die Klinge zwischen der Anlagefläche des Klingenbalkens und der Andruckfläche der Fixierungsleiste fixiert wird, insbesondere wobei die erste und die zweite Betätigungsschwenkbewegung ineinander übergehen.

Die erfindungsgemäße Ausgestaltung der Klingenhaltevorrichtung ist insbesondere sowohl bei Entschwartungsvorrichtungen als auch bei sogenannten Entvliesmaschinen einsetzbar. Andere Anwendungsbereiche, auch außerhalb der Lebensmitteltechnik, sind denkbar.

Nachfolgend wird die vorliegende Erfindung rein beispielhaft anhand einer vorteilhaften Ausführungsform unter Bezugnahme auf die beigefügten Zeichnungen erläutert. Es zeigen:
- Fig. 1: eine Seitenansicht einer Ausführungsform der erfindungsgemäßen Klingenhaltevorrichtung,
- Fig. 2: eine Perspektivansicht der Klingenhaltevorrichtung gemäß Fig. 1,
- Fig. 3A-3D: die Klingenhaltevorrichtung gemäß Fig. 1 in einem geöffneten Zustand nebst Vergrößerungen einzelner Seiten- bzw. Schnittansichten bestimmter Bereiche,
- Fig. 4A-4D: die Klingenhaltevorrichtung gemäß Fig. 1 in einem geschlossenen aber noch nicht verspannten Zustand nebst Vergrößerungen einzelner Seiten- bzw. Schnittansichten bestimmter Bereiche,
- Fig. 5A-5D: die Klingenhaltevorrichtung gemäß Fig. 1 während eines ersten Schritts des Verspannens nebst Vergrößerungen einzelner Seitenbzw. Schnittansichten bestimmter Bereiche,
- Fig. 6A-6D: die Klingenhaltevorrichtung gemäß Fig. 1 während eines zweiten Schritts des Verspannens nebst Vergrößerungen einzelner Seitenbzw. Schnittansichten bestimmter Bereiche und
- Fig. 7: eine Perspektivansicht einer Ausführungsform der Welle der Spannvorrichtung.

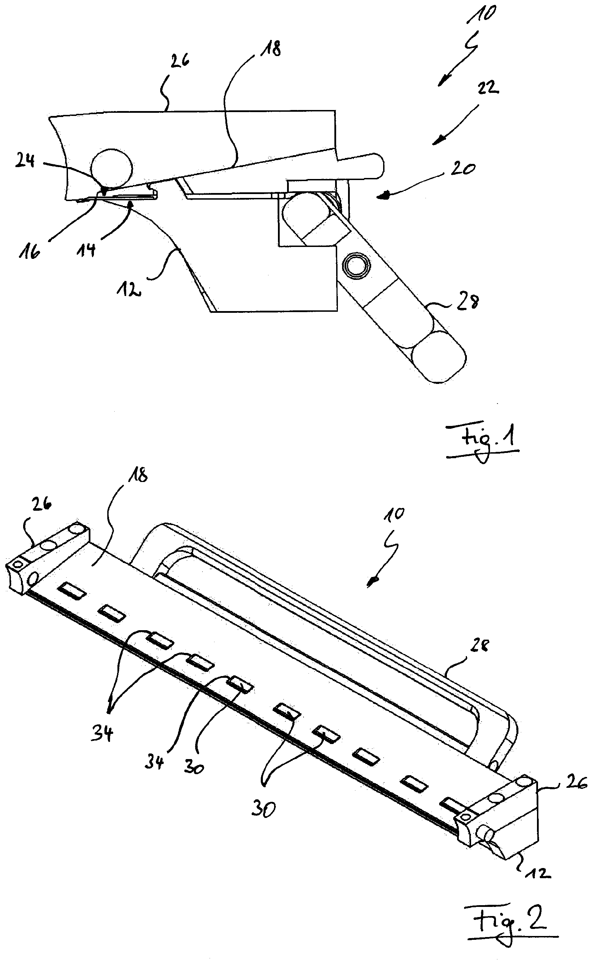

Fig. 1 zeigt eine Ausführungsform der Klingenhaltevorrichtung 10 in einer Seitenansicht. Die Klingenhaltevorrichtung 10 umfasst einen Klingenbalken 12 mit einer Anlagefläche 14, die eine Klinge 16 aufnimmt. Um die Klinge 16 auf der Anlagefläche 14 zu fixieren, ist eine Fixierungsleiste 18 vorgesehen, die mittels eines Betätigungshebels verschwenkt und verspannt werden kann. Sie wird mittels eines Spannmechanismus 20 einer Spannvorrichtung 22, die nachfolgend noch im Detail beschrieben wird, derart verspannt, dass eine Andruckfläche 24 der Fixierungsleiste 18 die Klinge 16 gegen die Anlagefläche 14 presst. Gezeigt ist ein Zustand, in dem die Fixierungsleiste 18 gegenüber dem Klingenbalken 12 verspannt wurde; die Klinge 16 ist also sicher fixiert. Nicht dargestellt ist eine der Klinge 16 zugeordnete Zugwalze. Diese befindet sich unterhalb der Klinge 16 und im Bereich der halbbogenförmigen Aussparung des Klingenbalkens 12. Sie zieht das zu bearbeitende Produkt in Richtung der Klinge 16.

Fig. 2 zeigt eine Perspektivansicht der Klingenhaltevorrichtung 10 (noch nicht in einem verspannten Zustand). Gut zu erkennen sind die beidseits der Fixierungsleiste 18 vorgesehenen Halteabschnitte 26, die fest oder einstückig mit dem Klingenbalken 12 verbunden sind. Sie dienen zur Befestigung der Klingenhaltevorrichtung 10 an einer Entschwartungsvorrichtung oder an einer anderen Einrichtung, in der eine Klinge fest und sicher gehalten werden muss.

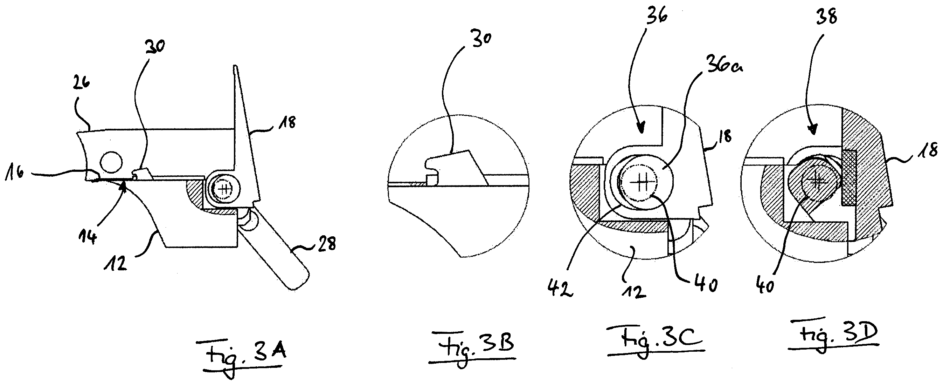

Anhand der Fig. 3A-3D, 4A-4D, 5A-5D und 6A-6D wird im Folgenden die Funktionsweise der Klingenhaltevorrichtung 10 erläutert.

Fig. 3A zeigt die Klingenhaltevorrichtung 10 in einem geöffneten Zustand. Die Fixierungsleiste 18 wurde mit Hilfe des Betätigungshebels 28, welcher auch zur Betätigung des Spannmechanismus 20 dient, nach hinten weggeklappt. Dadurch kann die Klinge 16 auf die Anlagefläche 14 aufgelegt werden, was in Fig. 3A bereits geschehen ist. Zu sehen ist auch eines von mehreren Führungselementen 30, das einstückig mit dem Klingenbalken 12 ausgebildet ist. Die Führungselemente 30 können auch separate Bauteile sein, die mit dem Klingenbalken 12 fest verbunden, beispielsweise verschraubt sind.

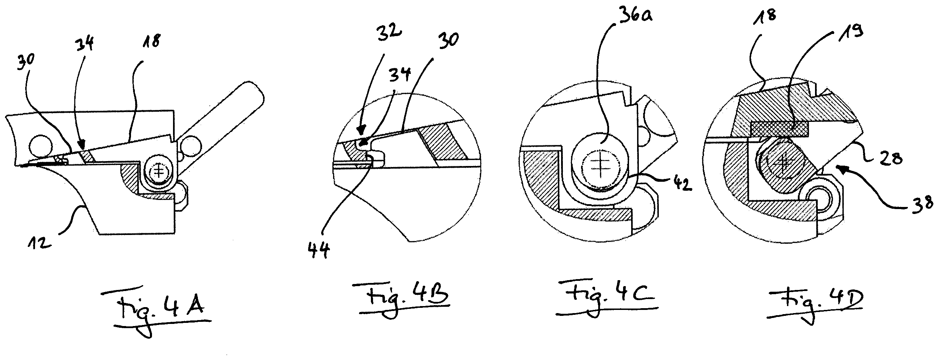

Eine vergrößerte Ansicht des Führungselements 30 ist in Fig. 3B gezeigt. In Fig. 2 sind die Oberseiten der Führungselemente 30 zu sehen, die durch die Fixierungsleiste 18 hindurch ragen. Die Führungselemente 30 wirken nämlich mit entsprechenden Führungselementen 32 zusammen, deren Funktionskomponenten in Öffnungen oder Durchbrechungen 34 der Fixierungsleiste 18 angeordnet sind (siehe hierzu insbesondere Fig. 4B, 5B und 6B). Die Elemente 30, 32 bzw. Öffnungen 34 sind über eine Längserstreckung der Klingenhaltevorrichtung 10 gleichmäßig verteilt. Es ist jedoch durchaus denkbar, diese Komponenten auch ungleichmäßig zu verteilen, um den tatsächlich auftretenden Kräften bestmöglich Rechnung tragen zu können. Beispielsweise ist es denkbar, im mittleren Bereich der Anordnung, welcher stärker durch das zu bearbeitende Produkt belastet ist, verstärkt für eine gute Führung und eine hohe Anpresskraft zu sorgen.

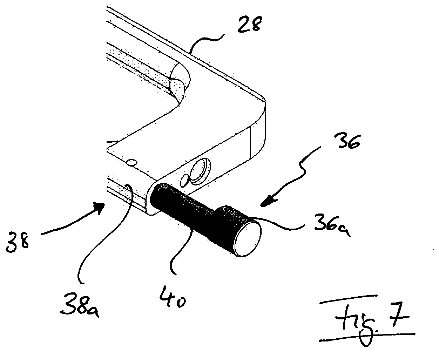

Die Fig. 3C und 3D zeigen vergrößerte Darstellungen eines ersten Exzentermechanismus 36 (Fig. 3C, Seitenansicht) bzw. eines zweiten Exzentermechanismus 38 (Fig. 3D, Schnittansicht). Wie in Fig. 7 zu sehen ist, die eine die Exzentermechanismen 36, 38 tragende und mit dem Betätigungshebel 28 drehfest verbundene Welle 40 in einer Perspektivansicht zeigt, umfasst der erste Exzentermechanismus 36 zwei Exzenterabschnitte 36a, die seitlich außerhalb eines zentralen Exzenterabschnitts 38a des zweiten Exzentermechanismus 38 angeordnet sind (nur einer der Abschnitte 36a ist in dem gewählten Ausschnitt sichtbar, die Welle 40 ist jedoch im vorliegenden Beispiel symmetrisch ausgestaltet). Die Welle 40 ist - direkt oder indirekt - an dem Klingenbalken 12 drehbar gelagert, beispielsweise im Bereich zwischen den Abschnitten 36a, 38a.

Die Exzenterabschnitte 36a des Exzentermechanismus 36 sind jeweils in Langlöchern 42 der Fixierungsleiste 18 angeordnet. Wie nachfolgend noch erläutert wird, ermöglicht dies während der Spannbewegung ein Ausweichen des der Klinge 16 abgewandten Endes der Fixierungsleiste 18 nach oben.

Nun wird die Fixierungsleiste 18 nach vorne geklappt, sodass sich der in Fig. 4A gezeigte Zustand einstellt. Wie in Fig. 4B zu sehen ist, sind die Führungselemente 30, 32 in diesem Zustand noch nicht in Eingriff miteinander. D.h. ein jeweiliger Absatz 44 der Führungselemente 32 befindet sich noch außerhalb von durch die Führungselemente 30 gebildeten Hinterschnitten.

Die Führungselemente 32 umfassen in der dargestellten Ausführungsform letztlich jeweils lediglich eine Durchbrechung oder Öffnung 34, die einen Absatz 44 aufweist. Lediglich der Absatz 44 wirkt mit dem entsprechenden Führungselement 30 direkt zusammen. Aufgrund der "offenen" Ausgestaltung der Führungselemente 32 sind diese sehr leicht zu reinigen. Außerdem kann visuell überprüft werden, ob die Führungselemente 30, 32 korrekt zusammenwirken. Grundsätzlich können die Absätze 44 auch separate Elemente sein, die mit der Fixierungsleiste 18 verbunden sind.

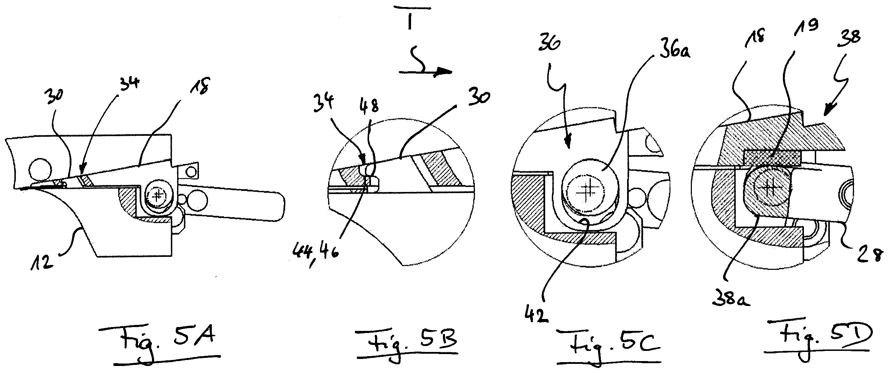

Zum Spannen der Klingenhaltevorrichtung 10 wird der Betätigungshebel 28 weiter verschwenkt bzw. nach unten gedrückt (siehe Fig. 5A bis 5D), wodurch aufgrund des Exzentermechanismus 36 - also letztlich aufgrund einer Drehbewegung der Exzenterabschnitte 36a in den in diesem Zustand im Wesentlichen vertikal ausgerichteten Langlöchern 42 - eine Translationsbewegung T der Fixierungsleiste 18 in einer Ebene im Wesentlichen parallel zu den Flächen 14, 24 bzw. zu der Klinge 16 erzeugt wird. Die Leiste 18 wird also nach rechts gezogen. Dadurch bewegen sich oder gleiten die Absätze 44 unter die Hinterschnitte der Führungselemente 30. Die dabei zusammenwirkenden Führungsflächen 46, 48 der Elemente 32 bzw. 30 sind im Wesentlichen parallel zueinander und zu den Flächen 14, 24 angeordnet, sodass durch die Translationsbewegung T kein signifikanter vertikaler Versatz erzeugt wird. Mit anderen Worten wird noch kein relevanter Anpressdruck auf die Klinge 16 ausgeübt. Auch der Exzentermechanismus 38 ist noch insofern inaktiv, als dass noch kein wesentlicher Druck auf die Fixierungsleiste 18 in einer Richtung weg von dem Klingenbalken 12 ausgeübt wird. Der Exzenterabschnitt 38a steht zwar mit einer an der Fixierungsleiste 18 befestigten POM-Leiste 19 in Kontakt, er übt allerdings noch keinen relevanten, nach oben gerichteten Druck auf die Leiste 19 und damit auf die Fixierungsleiste 18 aus.

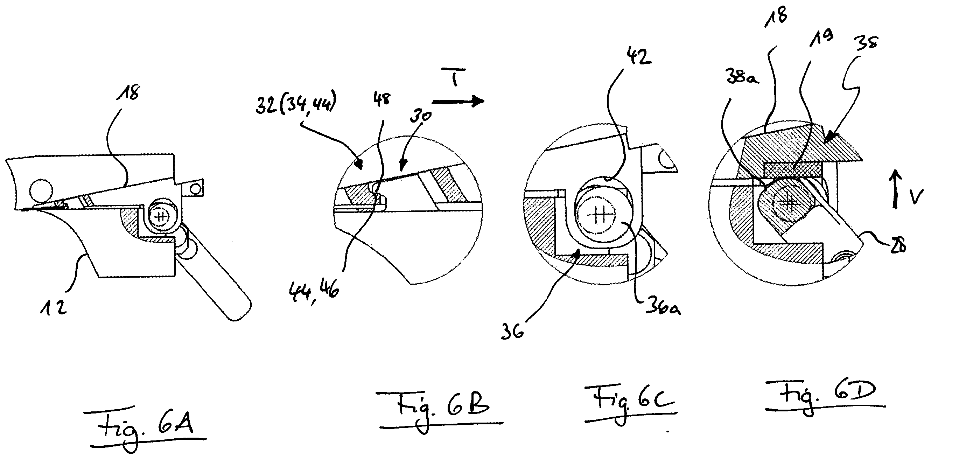

Bei einer weiteren Schwenkbewegung des Betätigungshebels 28, die sich nahtlos an dessen Schwenkbewegung zur Erzeugung der Translationsbewegung T der Fixierungsleiste 18 anschließt, kommt nun zusätzlich der Exzentermechanismus 38 zum Tragen. Der zunehmende Durchmesser des mit der Leiste 19 zusammenwirkenden Teils des Exzenterabschnitts 38a führt dazu, dass das der Klinge 16 abgewandte Ende der Fixierungsleiste 18 von dem Klingenbalken 12 weggedrückt wird (siehe Fig. 6D). Dies erzeugt eine Vertikalkomponente V der Bewegung der Fixierungsleiste 18. Die Translationsbewegung T setzt sich dabei fort, wie Fig. 6C zu entnehmen ist.

Die Führungselemente 30, 32 wirken dabei als eine Art Lager, so dass der vordere Teil der Fixierungsleiste 18 und damit die Andruckfläche 24 gegen die Klinge 16 gedrückt wird. Die somit erzeugte Kraft fixiert die Klinge 16 sicher zwischen der Fixierungsleiste 18 und dem Klingenbalken 12. Der sich nach dem Abschluss des Verspannens einstellende Zustand ist in den Fig. 6A bis 6D gezeigt. Fig. 6C macht deutlich, dass das "Wegdrücken" der Fixierungsleiste 18 von dem Klingenbalken 12 durch das im Wesentlichen vertikale Spiel zugelassen wird, das die Langlöcher 42 für die Abschnitte 36a bereitstellen. In diesem Zusammenhang sei nochmals darauf hingewiesen, dass die Führungselemente 30, 32 selbst keinen vertikalen Versatzes erzeugen, da die Führungsflächen 46, 48 parallel angeordnet sind.

### Bezugszeichenliste

- 10: Klingenhaltevorrichtung
- 12: Klingenbalken
- 14: Anlagefläche
- 16: Klinge
- 18: Fixierungsleiste
- 19: POM-Leiste
- 20: Spannmechanismus
- 22: Spannvorrichtung
- 24: Andruckfläche
- 26: Halteabschnitt
- 28: Betätigungshebel
- 30,32: Führungselement
- 34: Öffnung/Durchbrechung
- 36,38: Exzentermechanismus
- 36a, 38a: Exzenterabschnitt
- 40: Welle
- 42: Langloch
- 44: Absatz
- 46,48: Führungsfläche

- T: Translationsbewegung
- V: Vertikalkomponente

## Patentansprüche

1. Klingenhaltevorrichtung zur Fixierung einer Klinge (16) mit einer Schneidkante, insbesondere für eine Entschwartungsvorrichtung, umfassend:
- einen Klingenbalken (12) mit einer Anlagefläche (14) zur Aufnahme der Klinge (16),
- eine relativ zu der Anlagefläche (14) bewegbare Fixierungsleiste (18) mit einer Andruckfläche (24) zum Fixieren der Klinge (16) auf der Anlagefläche (14),
- eine Spannvorrichtung (22) zum Verspannen des Klingenbalkens (12) und der Fixierungsleiste (18) gegeneinander,
wobei der Klingenbalken (12) eine erste Führungseinrichtung (30) aufweist, die bei einem Verspannen des Klingenbalkens (12) und der Fixierungsleiste (18) mit einer zweiten Führungseinrichtung (32) zusammenwirkt, die an der Fixierungsleiste (18) angeordnet ist und wobei die zweite Führungseinrichtung (32) in einer die Fixierungsleiste durchtretenden Ausnehmung, Durchbrechung oder Öffnung (34) angeordnet ist,
**dadurch gekennzeichnet, dass**
die erste und die zweite Führungseinrichtung (30, 32) einander zugewandte und beim Verspannen zusammenwirkende Führungsflächen (48 bzw. 46) aufweisen, die im Wesentlichen parallel zu der Anlagefläche (14) ausgerichtet sind.

2. Klingenhaltevorrichtung nach Anspruch 1,
**dadurch gekennzeichnet, dass**
die zweite Führungseinrichtung (32) einen Absatz (44) umfasst, welcher in der Ausnehmung, Durchbrechung oder Öffnung (34) der Fixierungsleiste (18) angeordnet ist.

3. Klingenhaltevorrichtung nach Anspruch 1 oder 2,
**dadurch gekennzeichnet, dass**
die erste Führungseinrichtung (30) einen in einer Richtung senkrecht zu der Anlagefläche (14) wirkenden Hinterschnitt umfasst.

4. Klingenhaltevorrichtung nach einem der vorstehenden Ansprüche,
**dadurch gekennzeichnet, dass**
die Führungsfläche (46) der zweiten Führungseinrichtung (32) der Anlagefläche (14) abgewandt ist und die Führungsfläche (48) der ersten Führungseinrichtung (30) der Anlagefläche (14) zugewandt ist.

5. Klingenhaltevorrichtung nach einem der vorstehenden Ansprüche,
**dadurch gekennzeichnet, dass**
die erste Führungseinrichtung (30) einstückig mit dem Klingenbalken (12) ausgebildet ist und/oder die zweite Führungseinrichtung (32) einstückig mit der Fixierungsleiste (18) ausgebildet ist.

6. Klingenhaltevorrichtung nach einem der vorstehenden Ansprüche,
**dadurch gekennzeichnet, dass**
die erste und die zweite Führungseinrichtung jeweils eine Mehrzahl von über eine Längserstreckung des Klingenbalkens (12) bzw. der Fixierungsleiste (18) verteilt angeordnete, separate erste und zweite Führungselemente (30, 32) umfasst.

7. Klingenhaltevorrichtung nach einem der vorstehenden Ansprüche,
**dadurch gekennzeichnet, dass**
die Spannvorrichtung (22) einen zweistufigen Spannmechanismus (36, 38) aufweist, mit dem eine Translationsbewegung (T) der Fixierungsleiste (18) in einer Richtung parallel zu der Anlagefläche (14) und eine Spannbewegung (V) zum Drücken der Andruckfläche (24) gegen die Klinge (16) erzeugbar sind, insbesondere wobei die Spannbewegung (V) eine Schwenkbewegung der Fixierungsleiste (18) umfasst und/oder insbesondere wobei der Klingenbalken (12) eine erste Führungseinrichtung (30) aufweist, die bei einem Verspannen des Klingenbalkens (12) und der Fixierungsleiste (18) mit einer zweiten Führungseinrichtung (32) zusammenwirkt, die an der Fixierungsleiste (18) angeordnet ist.

8. Klingenhaltevorrichtung nach Anspruch 7,
**dadurch gekennzeichnet, dass**
der Spannmechanismus derart ausgestaltet ist, dass die Translationsbewegung (T) mittels einer ersten Betätigungsschwenkbewegung und die Spannbewegung (V) der Fixierungsleiste (18) mittels einer zweiten Betätigungsschwenkbewegung erzeugbar sind, insbesondere wobei die erste und die zweite Betätigungsschwenkbewegung ineinander übergehen.

9. Klingenhaltevorrichtung nach Anspruch 7 oder 8,
**dadurch gekennzeichnet, dass**
der Spannmechanismus eine erste Exzentereinrichtung (36) zur Erzeugung der Translationsbewegung (T) und eine zweite Exzentereinrichtung (38) zur Erzeugung der Spannbewegung (V) umfasst.

10. Klingenhaltevorrichtung nach Anspruch 9,
**dadurch gekennzeichnet, dass**
die erste und die zweite Exzentereinrichtung (36, 38) drehfest an einer Welle (40) des Spannmechanismus angeordnet sind, die mittels einer Hebeleinrichtung (28) verdrehbar gelagert ist, insbesondere mittelbar oder unmittelbar an dem Klingenbalken (12).

11. Klingenhaltevorrichtung nach Anspruch 9 oder 10,
**dadurch gekennzeichnet, dass**
die erste Exzentereinrichtung (36) zumindest abschnittsweise in einem an der Fixierungsleiste (18) vorgesehenen Langloch (42) angeordnet ist, dessen Längsachse sich in einer Richtung quer, insbesondere im Wesentlichen senkrecht zur der Anlagefläche (14) erstreckt.

12. Verfahren zum Fixieren einer Klinge in einer Klingenhaltevorrichtung gemäß zumindest einem der Ansprüche 7 bis 11, wobei durch die Spannvorrichtung (22) mittels einer ersten Betätigungsschwenkbewegung eine Translationsbewegung (T) und mittels einer zweiten Betätigungsschwenkbewegung eine Spannbewegung (V) der Fixierungsleiste (18) erzeugt wird, durch die die Klinge (16) zwischen der Anlagefläche (14) des Klingenbalkens (12) und einer Andruckfläche (24) der Fixierungsleiste (18) fixiert wird, insbesondere wobei die erste und die zweite Betätigungsschwenkbewegung ineinander übergehen.

## Claims

1. A blade holding apparatus for fixing a blade (16) having a cutting edge, in particular for a derinding apparatus, comprising:
- a blade bar (12) having a contact surface (14) for receiving the blade (16);
- a fixing rail (18) which is movable relative to the contact surface (14) and which has a pressing surface (24) for fixing the blade (16) on the contact surface (14); and
- a clamping apparatus (22) for clamping the blade bar (12) and the fixing rail (18) against one another,
wherein the blade bar (12) has a first guide device (30) which, on a clamping of the blade bar (12) and the fixing rail (18), cooperates with a second guide device (32) which is arranged at the fixing rail (18), and wherein the second guide device (32) is arranged in a recess, an aperture or an opening (34) passing through the fixing rail,
**characterized in that**
the first and the second guide device (30, 32) have guide surfaces (48 and 46 respectively) which face one another, which cooperate during the clamping and which are aligned substantially in parallel with the contact surface (14).

2. A blade holding apparatus in accordance with claim 1,
**characterized in that**
the second guide device (32) comprises a shoulder (44) which is arranged in the recess, the aperture or the opening (34) of the fixing rail (18).

3. A blade holding apparatus in accordance with claim 1 or claim 2,
**characterized in that**
the first guide device (30) comprises an undercut acting in a direction perpendicular to the contact surface (14).

4. A blade holding apparatus in accordance with any one of the preceding claims,
**characterized in that**
the guide surface (46) of the second guide device (32) faces away from the contact surface (14) and the guide surface (48) of the first guide device (30) faces the contact surface (14).

5. A blade holding apparatus in accordance with any one of the preceding claims,
**characterized in that**
the first guide device (30) is formed in one piece with the blade bar (12) and/or the second guide device (32) is formed in one piece with the fixing rail (18).

6. A blade holding apparatus in accordance with any one of the preceding claims,
**characterized in that**
the first and the second guide device each comprise a plurality of separate first and second guide elements (30, 32) which are arranged distributed along a longitudinal extent of the blade bar (12) or of the fixing rail (18).

7. A blade holding apparatus in accordance with any one of the preceding claims,
**characterized in that**
the clamping apparatus (22) has a two-stage clamping mechanism (36, 38) by which a translational movement (T) of the fixing rail (18) in a direction in parallel with the contact surface (14) and a clamping movement (V) for pressing the pressing surface (24) against the blade (16) can be generated, in particular with the clamping movement (V) comprising a pivot movement of the fixing rail (18) and/or in particular with the blade bar (12) having a first guide device (30) which, on a clamping of the blade bar (12) and the fixing rail (18), cooperates with a second guide device (32) which is arranged at the fixing rail (18).

8. A blade holding apparatus in accordance with claim 7,
**characterized in that**
the clamping mechanism is designed such that the translational movement (T) can be generated by means of a first actuating pivot movement and the clamping movement (V) of the fixing rail (18) can be generated by means of a second actuating pivot movement, in particular with the first actuating pivot movement and the second actuating pivot movement merging into one another.

9. A blade holding apparatus in accordance with claim 7 or claim 8,
**characterized in that**
the clamping mechanism comprises a first eccentric device (36) for generating the translational movement (T) and a second eccentric device (38) for generating the clamping movement (V).

10. A blade holding apparatus in accordance with claim 9,
**characterized in that**
the first and the second eccentric device (36, 38) are rotationally fixedly arranged at a shaft (40) of the clamping mechanism which is rotatably supported by means of a lever device (28), in particular indirectly or directly supported at the blade bar (12).

11. A blade holding apparatus in accordance with claim 9 or claim 10,
**characterized in that**
the first eccentric device (36) is at least sectionally arranged in an elongated hole (42) which is provided at the fixing rail (18) and whose longitudinal axis extends in a direction transverse to, in particular substantially perpendicular to, the contact surface (14).

12. A method of fixing a blade in a blade holding apparatus in accordance with at least one of the claims 7 to 11, wherein, by the clamping apparatus (22), a translational movement (T) is generated by means of a first actuating pivot movement and a clamping movement (V) of the fixing rail (18) is generated by means of a second actuating pivot movement, by which clamping movement the blade (16) is fixed between the contact surface (14) of the blade bar (12) and a pressing surface (24) of the fixing rail (18), in particular wherein the first actuating pivot movement and the second actuating pivot movement merge into one another.

## Revendications

1. Dispositif porte-lame pour fixer une lame (16) pourvue d'un bord tranchant, en particulier pour un dispositif de découennage, comprenant :
- une barre porte-lame (12) ayant une surface d'appui (14) pour recevoir la lame (16),
- une baguette de fixation (18) mobile par rapport à la surface d'appui (14) et ayant une surface de pression (24) pour fixer la lame (16) sur la surface d'appui (14),
- un dispositif de serrage (22) pour serrer la barre porte-lame (12) et la baguette de fixation (18) l'une contre l'autre,
la barre porte-lame (12) présentant un premier organe de guidage (30) qui, lors d'un serrage de la barre porte-lame (12) et de la baguette de fixation (18), coopère avec un deuxième organe de guidage (32) disposé sur la baguette de fixation (18), le deuxième organe de guidage (32) étant disposé dans un évidement, une traversée ou une ouverture (34) traversant la baguette de fixation,
**caractérisé en ce que**
les premier et deuxième organes de guidage (30, 32) présentent des surfaces de guidage (48 ou 46) tournées l'une vers l'autre et coopérant lors du serrage, qui sont orientées sensiblement parallèlement à la surface d'appui (14).

2. Dispositif porte-lame selon la revendication 1,
**caractérisé en ce que**
le deuxième organe de guidage (32) comprend un épaulement (44) qui est disposé dans l'évidement, la traversée ou l'ouverture (34) de la baguette de fixation (18).

3. Dispositif porte-lame selon la revendication 1 ou 2,
**caractérisé en ce que**
le premier organe de guidage (30) présente une contre-dépouille agissant dans une direction perpendiculaire à la surface d'appui (14).

4. Dispositif porte-lame selon l'une des revendications précédentes,
**caractérisé en ce que**
la surface de guidage (46) du deuxième organe de guidage (32) est détournée de la surface d'appui (14), et la surface de guidage (48) du premier organe de guidage (30) est tournée vers la surface d'appui (14).

5. Dispositif porte-lame selon l'une des revendications précédentes,
**caractérisé en ce que**
le premier dispositif de guidage (30) est réalisé d'une seule pièce avec la barre porte-lame (12) et/ou le deuxième organe de guidage (32) est réalisé d'une seule pièce avec la baguette de fixation (18).

6. Dispositif porte-lame selon l'une des revendications précédentes,
**caractérisé en ce que**
les premier et deuxième organes de guidage comprennent chacun une pluralité de premiers et deuxièmes éléments de guidage (30, 32) séparés, répartis sur une extension longitudinale de la barre porte-lame (12) ou de la baguette de fixation (18).

7. Dispositif porte-lame selon l'une des revendications précédentes,
**caractérisé en ce que**
le dispositif de serrage (22) comprend un mécanisme de serrage (36, 38) à deux étages permettant de générer un mouvement de translation (T) de la baguette de fixation (18) dans une direction parallèle à la surface d'appui (14) et un mouvement de serrage (V) pour presser la surface de pression (24) contre la lame (16), en particulier, le mouvement de serrage (V) incluant un mouvement de pivotement de la baguette de fixation (18) et/ou en particulier, la barre porte-lame (12) comprenant un premier organe de guidage (30) qui, lors d'un serrage de la barre porte-lame (12) et de la baguette de fixation (18), coopère avec un deuxième organe de guidage (32) disposé sur la baguette de fixation (18).

8. Dispositif porte-lame selon la revendication 7,
**caractérisé en ce que**
le mécanisme de serrage est conçu de telle sorte que le mouvement de translation (T) peut être généré au moyen d'un premier mouvement de pivotement d'actionnement et que le mouvement de serrage (V) de la baguette de fixation (18) peut être généré au moyen d'un deuxième mouvement de pivotement d'actionnement, en particulier les premier et deuxième mouvements de pivotement d'actionnement se confondant.

9. Dispositif porte-lame selon la revendication 7 ou 8,
**caractérisé en ce que**
le mécanisme de serrage comprend un premier organe à excentrique (36) pour générer le mouvement de translation (T) et un deuxième organe à excentrique (38) pour générer le mouvement de serrage (V).

10. Dispositif porte-lame selon la revendication 9,
**caractérisé en ce que**
les premier et deuxième organes à excentrique (36, 38) sont disposés solidairement en rotation sur un arbre (40) du mécanisme de serrage, qui est monté de manière à pouvoir tourner au moyen d'un organe à levier (28), en particulier directement ou indirectement sur la barre porte-lame (12).

11. Dispositif porte-lame selon la revendication 9 ou 10,
**caractérisé en ce que**
le premier organe à excentrique (36) est disposé au moins localement dans un trou oblong (42) prévu sur la baguette de fixation (18), dont l'axe longitudinal s'étend dans une direction transversale, en particulier sensiblement perpendiculaire à la surface d'appui (14).

12. Procédé de fixation d'une lame dans un dispositif porte-lame selon l'une au moins des revendications 7 à 11,
dans lequel le dispositif de serrage (22) génère un mouvement de translation (T) au moyen d'un premier mouvement de pivotement d'actionnement et génère un mouvement de serrage (V) de la baguette de fixation (18) au moyen d'un deuxième mouvement de pivotement d'actionnement, permettant de fixer la lame (16) entre la surface d'appui (14) de la barre porte-lame (12) et une surface de pression (24) de la baguette de fixation (18), en particulier les premier et deuxième mouvements de pivotement d'actionnement se confondant.
